# NEW EUROPEAN PATENT SPECIFICATION

(11) **EP 0 189 595 B2**
(45) Date of publication and mention of the opposition decision: **03.02.1993**
(45) Mention of the grant of the patent: 22.03.1989
(21) Application number: 85116587.8
(22) Date of filing: 27.12.1985
(51) Int. Cl.: C25F 3/04, H01G 9/04

(54) **Method for etching electrode foils for an aluminium electrolytic capacitor**
Verfahren zum Ätzen einer Elektrodenfolie für einen elektrolytischen Aluminiumkondensator
Procédé de décapage de feuilles d'électrode pour condensateur électrolytique en aluminium

(30) Priority: 28.12.1984 JP 280380/84
(43) Date of publication of application: 06.08.1986
(73) Proprietor: MATSUSHITA ELECTRIC INDUSTRIAL CO., LTD., Kadoma-shi, Osaka-fu, 571 (JP)
(72) Inventor: Kojima, Koichi, Hirakata-shi Osaka (JP); Jujo, Akihiro, Neyagawa-shi Osaka (JP); Okabayashi, Masanori, Uji-shi Kyoto (JP); Shimatani, Ryoichi, Tsuzuki-gun Kyoto (JP); Toyama, Kenji, Uji-shi Kyoto (JP); Kanzaki, Nobuyoshi, Joyo-shi Kyoto (JP)
(74) Representative: Pellmann, Hans-Bernd, Dipl.-Ing.

(56) References cited:
- DE-A- 3 127 330
- GB-A- 2 053 272
- US-A- 3 085 950
- US-A- 3 294 666
- US-A- 3 616 343
- US-A- 3 616 346
- US-A- 3 654 116

## Description

### Background of the invention

### Field of the invention

This invention relates to a method for etching an electrode foil for aluminium electrolytic capacitors.

### Description of the prior art

As is well known in the art, aluminium electrolytic capacitors are fabricated by convolutely winding aluminium electrode foils and an insulative paper intervening between the foils and dipping the winding in an electrolytic solution. In order to increase an electrostatic capacitance per unit area of the electrode foil, the foil used is etched to form pits on the surfaces thereof so as to increase the surface area.

A recent development of IC, LSI and the like demands electrolytic capacitors which are smaller and thinner in size. This in turn requires an increasing electrostatic capacitance per unit area of the electrode foil.

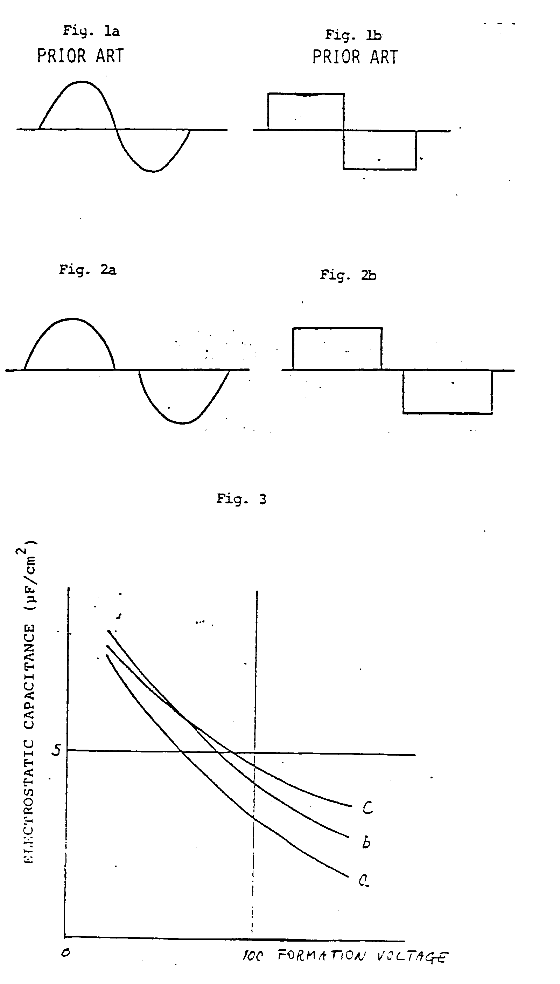

In a known method of etching electrode foils for use in aluminium electrolytic capacitors, an AC current having a sine or rectangular waveform as shown in Fig. 1a a or 1b b is used for etching while making use of high strength of the aluminium foil. this is described, for example, in Japanese Laid-open Patent Application 58-22390.

With known waveforms such as sine wave, rectangular wave and the like in which no OFF time exists, it is difficult to control, by etching, an optimum pit diameter (i.e. a diameter of irregularities caused by etching) which varies according to the formation voltage. For presecuting further miniaturization of aluminium electrolytic capacitors, the known method is disadvantageous in that a ratio of an electrostatic capacitance per unit area of electrode foil after etching to an electrostatic capacitance per unit area of electrode foil before etching is unsatisfactory. This ratio may be hereinafter referred to simply as "capacitance ratio".

Document DE 31 27 330 A1 also discloses a method for electrolytically etching an aluminium foil for use as an electrode of an aluminium electrolytic capacitor by use of an AC current. According to this prior art higher capacitance values of the etched aluminium can be obtained by controlling the AC current with respect to the increase and decrease speed of the current intensity which can be both higher or lower than zero. The AC current has a symmetrical waveform wherein the current rises rapidly from zero to a maximum, then subsequently decreases rapidly to an intermediate value and thereafter decreases slowly to zero. Thereafter, the current rises and falls in the opposite direction with the same waveform.

Document US-A-3 085 950 discloses another method for electrolytically etching aluminium foils particularly for electrolytic capacitors, in which no AC current, but a pulsating DC current is used. The etching of the aluminium foil depends thereby from the determination of a suitable pulse frequency. Furthermore, the specific type of the electrolyte to be used in this prior art is of particular importance.

From document DE 30 20 420 A1 a method for electrolytically roughening the surface of an aluminium plate serving as a support for a lithographic printing plate is known, in which also an AC current is used. The AC current used here has so-called intermission periods in which voltage and current intensity are equal to zero. Hereby it is essential that for achieving the desired roughness of the aluminium surface the quantity of electricity flowing during the anode phase is larger than the quantity of electricity flowing during the cathode phase. In addition to the use of different voltages the intermission periods are provided for the different control of the quantity of electricity flowing during the anode and cathode phase, wherein the quantity of electricity is adjusted to a desired value by the duration of a voltageless, respectively currentless intermission period. Hereby it is irrelevant where the intermission period lies and how long it lasts.

### SUMMARY OF THE INVENTION

It is accordingly an object of the invention to provide a method for electrolytically etching an aluminium foil for use as an electrode of an aluminium electrolytic capacitor in which the foil is more efficiently etched and thus has an improved electrostatic capacitance per unit area.

It is further object of the invention to provide such a method for electrolytically etching an aluminium foil to ensure a larger surface area than prior art methods, so that an aluminium electrolytic capacitor can be suitably miniaturized and can be fabricated at a lower cost.

The invention provides a method for electrolytically etching an aluminium foil for use as an electrode of an aluminium electrolytic capacitor, comprising electrolytically etching an aluminium foil on the surfaces thereof in a 3 to 25 % hydrochloric acid solution containing aluminium chloride at a temperature of 20° to 60° C by application of an AC current wherein the aluminium foil is placed between and in parallel to a pair of equally spaced electrodes in said hydrochloric solution, and the AC current is applied across the paired electrodes without direct application to the aluminium foil to etch the foil, said AC current having a waveform which has each cycle consisting of identical positive and negative half cycles in the form of a sine, rectangular or trapezoidal wave with or without ripples during the ON time intervals and an OFF time interval between the half cycles at which the AC current becomes zero, wherein each OFF time interval at which the AC current becomes zero is in the range of 2 to 30 ms and each ON time interval at which the AC current is passed is in the range of 10 to 100 ms, whereby a size of pits formed by the etching is suitably controlled.

### Brief description of the invention

Figs. 1 a and 1 b are, respectively, sine and rectangular waveforms of an etching current used in a known etching method;
Figs. 2a and 2b are, respectively, sine and rectangular waveforms of an etching current including OFF time intervals according to the invention; and
Fig. 3 is a graphical representation of the relation between formation voltage and electrostatic capacitance for different OFF time intervals.

### Detailed description and embodiments of the invention

According to the method of the invention, an aluminium foil is electrolytically etched in a hydrochloric acid solution containing aluminium chloride at a temperature of the solution of 20 to 60°C. The hydrochloric acid solution has an HCI concentration of 3 to 25%. Aluminium chloride is generally used in an amount of 1 to 10% by weight of the solution.

In the practice of the invention, an AC current is used and applied for the etching. The AC current should have such a waveform whose one complete cycle consist of positive and negative half cycles and an interval between the half cycles at which the AC current becomes zero.

When the etching of an aluminium foil is conducted using the AC current as described above, fine irregularities or pits are formed on the surfaces of the aluminium foil during the ON time intervals. However, the etching or chemical corrosion, which proceeds in the hydrochloric acid solution, can be suitably controlled by controlling the length of each OFF time interval during which no etching current is passed. Thus, it becomes possible to make an optimum pit diameter according to the formation voltage. The resultant aluminium foil has an increasing capacitance ratio.

For the optimum electrolytic etching, it is necessary to optimumly control the chemical corrosion which proceeds in the hydrochloric solution during the OFF time, in accordance with the distribution and size of the individual pits formed by chemical etching during the ON time. In other words. the ON and OFF times have an optimum relation in order to form a desired pit diameter. For instance, if the OFF time is increased tog much, the pit diameter becomes too large, leading to a lowering of electrostatic capacitance.

According to our experiment, it has been found that the individual OFF time at which the etching current is kept zero is in the range of from 2 to 30 ms., and the ON time is in the range of from 10 to 100 ms.

The current during the ON time in complete cycles may be in the form of a sine, rectangular and trapezoidal wave with or without ripples. In Figs. 2a and 2b, there are, respectively, shown sine and rectangular waveforms inclusing an OFF time between the half cycles.

Preferably, the etching is effected in such a way that the aluminium foil is placed in the hydraulic acid solution between and in parallel to a pair of equally spaced electrodes and the AC current is applied across the paired electrodes without direct application of the current to the aluminium foil. This is very suitable for the production of a uniformly etched aluminium foil and contributes to reduce troubles such as breakage of the foil and formation of defects on the foil as will be produced by direct application of the current to the foil. As a matter of course, the etching may be effected continuously or in a batchwise manner.

The present invention is more particularly described by way of example.

### Example

Aluminium foils were etched in a hydrochlorid acid solution under the following conditions.

Etching solution: 5% HCI solution containing 2 % Aids.

Aluminium foil: 4N O AI material having a purity of 99.99°/a and softened by annealing.

Etching temperature (solution temp.): 40°C.

Etching time: 5 minutes.

Etching current waveform: sine wave of an ON time of 50 ms and an OFF time of (a) nil, (b) 10 ms. or (c) 20 ms.

The relationship between formation voltage and electrostatic capacitance of each etched aluminium foil is shown in Fig. 3. As will be seen from curves a, b and c of the Figure, the electrostatic capacitance attained by etching using the waveforms (b) and (c) having of times according to the invention is higher by 20 to 100% than in the case of the known waveform a which is free of any OFF time. A longer OFF time results in a larger pit diameter, so that the difference in electrostatic capacitance between the invention and the prior art becomes more significant at a higher formation voltage.

In the above example, the etching solution was a 5% hydrochloric acid solution and similar results were obtained when the concentration of HCI was in the range of 3 to 25%. Also, similar results were obtained when the concentration of aluminium chloride was in the range of 1 to 10% by weight.

When using an aluminium foil having a higher capacitance ratio, aluminium electrolytic capacitors can be beneficially miniaturized with a reduced cost.

## Claims

1. A method for electrolytically etching an aluminium foil for use as an electrode of an aluminium electrolytic capacitor, comprising electrolytically etching an aluminium foil on the surfaces thereof in a 3 to 25 % hydrochloric acid solution containing aluminium chloride at a temperature of 20 to 60° by application of an AC current wherein the aluminium foil is placed between and in parallel to a pair of equally spaced electrodes in said hydrochloric solution, and the AC current is applied across the paired electrodes without direct application to the aluminium foil to etch the foil, said AC current having a waveform which has each cycle consisting of identical positive and negative half cycles in the form of a sine, rectangular or trapezoidal wave with or without ripples during the ON time intervals and an OFF time interval between the half cycles at which the AC current becomes zero, wherein each OFF time interval at which the AC current becomes zero is in the range of 2 to 30 ms and each ON time interval at which the AC current is passed is in the range of 10 to 100 ms, whereby a size of pits formed by the etching is suitably controlled.

## Patentansprüche

1. Verfahren zum elektrolytischen Ätzen einer Aluminiumfolie für die Verwendung als Elektrode eines Aluminium-Elektrolytkondensators, das das elektrolytische Ätzen einer Aluminiumfolie an deren Oberfläche in einer Aluminiumchlorid enthaltenden 3 bis 25 %-igen Salzsäurelösung bei einer Temperatur von 20 bis 60° C durch Anwendung von Wechselstrom umfaßt, bei dem die Aluminiumfolie zwischen einem und parallel zu einem Paar in gleichem Abstand angeordneter Elektroden in der Salzsäurelösung eingebracht wird und zum Ätzen der Folie der Wechselstrom über das Elektrodenpaar ohne direktes Zuführen zur Aluminiumfolie zugeführt wird, wobei der Wechselstrom eine Kurvenform hat, bei der jede Periode aus identischen positiven und negativen Halbwellen in der Form einer Sinus-, Rechteck- oder Trapezwelle mit oder ohne Welligkeit während der EIN-Zeitintervalle, und aus einem AUS-Zeitintervall zwischen den Halbwellen besteht, in welchem der Wechselstrom zu "0" wird, und wobei jedes AUS-Zeitintervall, in dem der Ätzstrom zu "0" wird, im Bereich von 2 bis 30 ms liegt und jedes EIN-Zeitintervall, in dem der Ätzstrom durchgelassen wird, im Bereich von 10 bis 100 ms liegt, wodurch die Größe von durch das Ätzen geformten Vertiefungen gesteuert wird.

## Revendications

1. Procédé pour attaquer électrolytiquement une feuille d'aluminium devant être utilisée comme électrode d'un condensateur électrolytique à l'aluminium, comprenant l'attaque électrolytique d'une feuille d'aluminium, sur les surfaces de celle-ci, dans une solution à 3 à 25 % d'acide chlorhydrique contenant du chlorure d'aluminium à une température comprise entre 20 et 60°C par application d'un courant alternatif, la feuille d'aluminium étant placée entre une paire d'électrodes et parallèlement à cette paire d'électrodes espacées de façon égale dans la solution d'acide chlorhydrique, et le courant alternatif étant appliqué entre les électrodes appariées sans être appliqué directement à la feuille d'aluminium pour attaquer cette feuille, ledit courant alternatif ayant une forme d'onde dont chaque cycle se compose de demi-cycles positif et négatif identiques et se présentant sous la forme d'une onde sinusoïdale, rectangulaire ou trapézoïdale avec ou sans ondulations pendant les intervalles de temps avec courant, ou temps de MARCHE, et d'un intervalle de temps sans courant, ou temps d'ARRET, se situant entre les demi-cycles et pendant lequel le courant alternatif devient nul, chaque intervalle de temps d'ARRET pendant lequel le courant alternatif devient nul ayant une durée comprise entre 2 et 30 ms et chaque intervalle de temps de MARCHE, pendant lequel le courant alternatif passe, ayant une durée comprise entre 10 et 100 ms, grâce à quoi la taille des creux formés par l'attaque peut être contrôlée de façon appropriée.
